**Europäisches Patentamt**

**European Patent Office**

**Office européen des brevets**

(19)

(11) Veröffentlichungsnummer : **0 022 132**
**B1**

(12) **EUROPÄISCHE PATENTSCHRIFT**

(45) Veröffentlichungstag der Patentschrift :
08.02.84

(51) Int. Cl.³ : **F 23 G  9/00**, A 01 F 29/00

(21) Anmeldenummer : **80890073.2**

(22) Anmeldetag : **27.06.80**

(54) **Verfahren zum Verbrennen von Halmen, Anlage zur Ausübung dieses Verfahrens und Einrichtung zum Schneiden von Halmen.**

(30) Priorität : 28.06.79 AT 4535/79

(43) Veröffentlichungstag der Anmeldung :
07.01.81 Patentblatt 81/01

(45) Bekanntmachung des Hinweises auf die Patenterteilung : 08.02.84 Patentblatt 84/06

(84) Benannte Vertragsstaaten :
BE CH DE FR GB IT LI LU NL SE

(56) Entgegenhaltungen :
DE-A- 1 526 099
DE-A- 2 356 507
DE-A- 2 608 559
DE-A- 2 727 467
DE-B- 2 721 213
DE-B- 2 754 725
DE-C-   521 682
DE-C-   936 488
FR-A- 2 295 349
FR-A- 2 450 039
US-A-   619 912
US-A- 3 635 455
US-A- 3 818 848
US-A- 4 082 198
US-A- 4 162 655
US-A- 4 169 418

(73) Patentinhaber : **Innova Wiener Innovationsgesellschaft m.b.H.
Beatrixgasse 1
A-1030 Wien III (AT)**

(72) Erfinder : **Berthiller, Franz
A-3474 Winkl 22 (AT)**

(74) Vertreter : **Krause, Ernst, Dipl.-Ing. et al
Dipl.- Ing. Krause Ernst Dipl. Ing. Casati Wilhelm
Patentanwälte Amerlingstrasse 8
A-1061 Wien (AT)**

Jouve, 18, rue St-Denis, 75001 Paris, France

## Verfahren zum Verbrennen von Halmen, Anlage zur Ausübung dieses Verfahrens und Einrichtung zum Schneiden von Halmen

Die Erfindung betrifft ein Verfahren zum Verbrennen von Halmen, insbes. von Stroh, wobei die Halme in Stücke geschnitten und in einem Luftstrom zur Feuerung gefördert und einem Schwelvorgang unterworfen werden, worauf den Schwelgasen Frischluft zugeführt und die Schwelgase sowie die schwelenden Halmstücke verbrannt werden, wonach die Abgase einer weiteren Verwendung zugeführt werden.

Durch die DE-A-2 721 213 wurde ein Verfahren zum Verbrennen von Stroh bekannt, bei dem ein Ballen nach dem anderen in den Feuerraum eingeführt und verbrannt wird. Dieses Verfahren arbeitet diskontinuierlich, wobei die Zuführung eines Ballens immer erst erfolgen kann, bis der vorhergehende Ballen nahezu zur Gänze verbrannt ist und nur mehr ein Glutnest zur Zündung des neuen Ballens im Feuerraum vorhanden ist.

Bei einem Verfahren der eingangs erwähnten Art wurde es bekannt (DE-B-27 54 725), Stroh gemeinsam mit Luft, tangential in eine Brennkammer einzuführen. Damit wird eine Einblasefeuerung mit all ihren Nachteilen geschaffen, insbes. können die Strohhalme Anlaß zu einem Verstopfen der unmittelbar in die Brennkammer führenden, relativ eng zu dimensionierenden Leitung führen, was zu einem Abreissen der Flamme führen kann. Nach dem bekannten Verfahren werden die Abgase in einem Wärmetauscher zur Erzeugung von Heißluft verwendet. Eine unmittelbare Verwendung der Abgase, z. B. für Trocknungszwecke, scheidet aus, weil die Abgase Unverbranntes, gegebenenfalls auch Asche, enthalten können. Eine Abscheidung dieser Stoffe in der Bodenkammer ist bei der üblicherweise hohen Gasgeschwindigkeit in Einblasefeuerungen nicht zu erwarten.

Der Erfindung liegt die Aufgabe zugrunde, ein Verfahren zum Verbrennen von Halmen, insbes. Stroh, zu schaffen, das bei kontinuierlicher Arbeit eine weitgehend vollkommene Verbrennung bei relativ geringer Gasgeschwindigkeit erlaubt und umweltfreundlich ist. Erreicht wird dieses Ziel bei einem Verfahren der eingangs erwähnten Art, wenn gemäß der Erfindung

i) vor Erreichen der Feuerung die Luft abgesondert und die Halmstücke komprimiert und als komprimierter Stoppel der Feuerung zugeführt werden,

ii) die im Bereich der freien Oberfläche der komprimierten schwelenden Halmstücke befindlichen Halme verbrannt werden, und

iii) aus den Abgasen der Verbrennung etwaige mitgerissene Asche entfernt wird und die so gereinigten Gase weiterverwendet werden.

Die Halme werden bevorzugt in etwa 8-10 cm lange Stücke geschnitten. Die gereinigte Heißluft kann z. B. zur Trocknung landwirtschaftlicher Erzeugnisse, insbes. Mais, Getreide usw. unmittelbar verwendet werden. Bei dem erfindungsgemäßen, kontinuierlich betriebenen Verfahren wird durch Komprimieren der Halme bei bzw. vor der Einführung in die Feuerung vermieden, daß durch den Zug im Feuerraum brennende Teilchen mitgerissen werden. Dadurch kann die Heißluft direkt der Trocknungsanlage zugeführt werden, wodurch ein günstiger Wirkungsgrad erzielt wird. Der Verbrennungsvorgang erfolgt zweistufig, wodurch eine große Annäherung an eine vollkommene Verbrennung erreicht wird. Die Umweltbelastung ist damit außerordentlich gering, wozu noch die Abtrennung der Asche beiträgt. Es ist eine nahezu rauchlose Verbrennung erzielbar. Das Strohlager kann vom Feuerraum entfernt angeordnet werden, da die Versorgung der Feuerung mit relativ kurzen Halmstücken erfolgt, die durch Luft zur Feuerung gefördert werden. Damit wird die Feuergefahr gegenüber Anlagen vermindert, die stoßweise mit großen Ballen Stroh versorgt werden müssen, das dann auch in der Nähe der Feuerung gelagert wird.

Eine weitere Ausführungsform des erfindungsgemäßen Verfahrens sieht vor, daß die Asche in Wasser eingebracht wird. Nach Erreichen einer bestimmten Aschenkonzentration kann das Gemisch zu Düngezwecken verwendet werden. Die Ascheausbringung kann dabei mittels Güllefaß erfolgen.

Die erfindungsgemäße Anlage zeichnet sich dadurch aus, daß zur Führung des Luftstromes und der in diesem befindlichen Halmstücke ein Förderkanal vorgesehen ist, der in einen, z. B. als Siebtrommel ausgebildeten Separator mündet, der mit einer Austragvorrichtung, z. B. einer Austragschnecke, versehen ist, die in einen Schachtofen über einen Zubringerkanal die Halme im verdickten Zustand fördert, der in den Schachtofen im Bereich von dessen Boden mündet, wobei eine Vorrichtung zur Zufuhr von Frischluft zu den Schwelgasen vorgesehen ist, und daß der Schachtofen von einer Abdeckhaube abgedeckt ist, die in einen Abscheider, insbes. Zyklon, für die mit den Abgasen aus dem Schachtofen mitgerissene Asche u. dgl. Feststoffe mündet, wobei an den Abscheider eine Absaugleitung für die gereinigten Heißgase angeschlossen ist.

In Weiterbildung der erfindungsgemäßen Anlage ist vorgesehen, daß die Vorrichtung zur Zufuhr von Frischluft zu den Schwelgasen eine in dem Schachtofen zentral angeordnete, an ein Frischluftgebläse angeschlossene Lanze aufweist, deren dem Boden des Schachtofens zugeordnetes Ende mit einem Düsenkopf versehen ist, dessen Düsen zur Längsachse der Lanze unter von 90° verschiedenen Winkeln geneigt sind und daß anschließend an den Düsenkopf der Mantel der Lanze mit Öffnungen versehen ist, wobei die dem Düsenkopf benachbarten Öffnungen unter rechtem Winkel zur Längsachse der Lanze angeordnet sind. Durch die Anordnung und Ausgestaltung der Lanze erfolgt die Primärluftzufuhr an der freien Oberfläche der in komprimierten Zustand befindlichen Halme, dadurch kommen die darunter befindlichen Halme nur zum Schwelen, jedoch wird den Schwelgasen im Zuge ihres Hochsteigens im Schachtofen genügend Luft zugeführt, so daß eine nahezu vollkommene Verbrennung erfolgt. Unmittelbar nach dem Verlassen des Brennstoffbettes gelangen die Schwelgase in den Bereich einer horizontalen (Sekundär)-Luftströmung, wodurch etwaige Feststoffe gegen die Wandung des Brennraumes geschleudert werden und von dort wieder in das Brennstoffbett zurückfallen, so daß in diesem Bereich bereits eine erste Reinigung der Schwelgase erfolgt. Darüber hinaus kommt es zu einer Verwirbelung, welche die Verbrennung fördert, so daß ein Flammenbild ähnlich jenem von gut eingestellten Ölfeuerungen oder Gasfeuerungen zu erwarten ist.

Gemäß einer weiteren Ausgestaltung des Erfindungsgegenstandes ist vorgesehen, daß der Förderkanal für die Halme, den Mantel des Ascheabscheiders nach Art einer Rohrschlange umschließt. Im stationären Betrieb wird hiebei die Erwärmung des Ascheabscheiders dazu benutzt, den Förderkanal, in dem die Halme transportiert werden, zu erwärmen und dadurch eine Trocknung der Halme bzw. ein Vorwärmen der Halme zu erreichen, wodurch eine rauchlose Verbrennung weiter gefördert wird.

Eine besonders wirkungsvolle Ascheabscheidung wird erreicht, wenn in besonderer Gestaltung der erfindungsgemäßen Anlage, in dem Ascheabscheidezyklon eine umlaufende Siebtrommel angeordnet ist, deren Achse sich in Richtung der Längsachse des Zyklons erstreckt und deren eine Stirnfläche in der Absaugleitung für die gereinigten Heißgase angeordnet ist. Die Asche wird hiebei kontinuierlich abgezogen und muß nicht, wie bei bekannten Strohverbrennungsanlagen nach einem Betrieb zwischen 7 und 8 Stunden aus dem Brennraum entfernt werden, was zu einer Betriebsunterbrechung führt.

Eine weitere Ausführungsform der erfindungsgemäßen Anlage sieht vor, daß mit der Welle der Siebtrommel eine Austragschnecke für die Asche gekuppelt ist, wobei gegebenenfalls die Welle der Siebtrommel bodenseitig aus dem Aschenabscheidezyklon herausgeführt und am freien Ende mit einem Rührer versehen ist, der in ein Wasserbassin ragt. Auf diese Weise ist die Abförderung der Asche aus dem Zyklon besonders einfach unter Verwendung von für die Aschenabscheidung selbst vorgesehenen Mittel möglich.

Die in den Zufuhrkanal von der Luft aufgenommene Wärme, die aus dem Ascheabscheider stammt, kann besonders günstig verwertet werden, wenn in besonderer Gestaltung der erfindungsgemäßen Anlage der Schachtofen, der ihm vorgeschaltete Separator und die Abdeckhaube des Schachtofens in einem gemeinsamen Gehäuse angeordnet sind, das gegebenenfalls im Bereich der Abdeckhaube eine in den Aschenabscheider mündende Öffnung aufweist, wobei die Abdeckhaube unter Belassung eines Spaltes von einer Außenhaube umschlossen ist, die mit dem Innenraum des Gehäuses, insbes. längs eines senkrecht zur Längsachse des Schachtofens verlaufenden Spaltes und mit dem Innenraum des Aschenabscheiders in Verbindung steht. Die bereits erwärmte Luft strömt bei dieser Ausführungsform den Schachtofen außen entlang, kühlt diesen und wird hiebei weiter aufgeheizt und streicht weiters die Abdeckhaube entlang, wo ein weiteres Aufheizen erfolgt, um schließlich mit den heißgasen aus dem Schachtofen gemischt mit diesen nach Durchgang durch den Aschenabscheider die Anlage zu verlassen.

Der Ausnutzung der erzeugten Wärme ist es weiters dienlich, wenn gemäß einer Ausführungsform der erfindungsgemäßen Anlage der Schachtofen, der ihm vorgeschaltete Separator, die Abdeckhaube des Schachtofens sowie der Aschenabscheider mit der Ansaugleitung für die Heißgase von einem Bauwerk umschlossen sind, in welches eine Abführleitung für Heißgase frei und im wesentlichen koaxial zur Absaugleitung, die an den Ascheabscheider angeschlossen ist, mündet, wobei der Querschnitt der Abführleitung am offenen Ende bevorzugt größer als der Querschnitt der Absaugleitung für die Heißgase ist. Hiedurch wird erreicht, daß der Großteil der in der Anlage erzeugten Wärme als Heizgas abgezogen werden kann, u. zw. über die gleiche Leitung wie die aus dem Schachtofen kommenden Gase. Der Wirkungsgrad wird hier umso besser, je besser das Gebäude isoliert ist. In die aus dem Gebäude führende Leitung kann das Ventilatorrad eingebaut sein.

Die gewünschte Halmlänge läßt sich besonders zweckmäßig in einer Einrichtung schneiden, bei der gemäß der Erfindung in einem der vorgegebenen Länge der Halme entsprechenden Abstand auf einer Welle Kreismesser bzw. Kreissägeblätter angeordnet sind, wobei die Halme in zu zylindrischen Ballen gepreßtem Zustand auf die Messerwelle aufgelegt werden und auf Stützwalzen, deren Achsen parallel zur Messerwelle angeordnet sind, ruhen. Ist der Abstand der Schneidräder auf der Welle veränderbar, so können unterschiedlich lange Halmstücke geschnitten werden.

Soll der Abtransport von der Schneideinrichtung und die Zufuhr zur Verbrennungsanlage, die von der Schneideinrichtung und dem Ballenlager aus Feuersicherheitsgründen entfernt ist, unmittelbar nach dem Schneiden erfolgen, so ist in Weiterbildung der Erfindung vorgesehen, daß unter der Messerwelle ein Sammelbehälter für die geschnittenen Halme angeordnet ist, wobei im Bereich des Bodens des Sammelbehälters ein Querförderer, insbes. eine Schnecke, angeordnet ist, welche die Halme in den zum Schachtofen bzw. dem dieser vorgeschalteten Separator führenden Förderkanal fördert, der gegebenenfalls an ein Luftgebläse angeschlossen ist.

Die Arbeitsweise der Schneideinrichtung kann in Abhängigkeit von der Ballenzufuhr bzw. vom Ballengewicht automatisiert werden, wenn gemäß einer bevorzugten Ausführungsform des Erfindungsgegenstandes eine der Stützwalzen auf einem Schwenkarm gelagert ist, der unter dem Einfluß einer Feder steht, die bestrebt ist, die Stützwalze anliegend an dem auf den Kreismessern liegenden Ballen zu halten, wobei im Schwenkbereich des Schwenkarmes ein Einschalter für den Kratzboden angeordnet ist und ein Ausschalter für den Kratzboden entweder ebenfalls im Schwenkbereich des Schwenkarmes oder im Schwenkbereich einer aus der Auflagenebene der Ballen aufragenden, durch eine Feder belasteten Klappe liegt. Sobald das Gewicht des Ballens unter einen Grenzwert gesunken ist, hat der federbelastete Schwenkarm eine Stellung erreicht, in der er den Einschalter betätigt. Dadurch wird der Kratzboden in Betrieb genommen und ein weiterer Ballen auf die Kreismesser und die Stützwalzen 33 aufgelegt. Damit wird der Schwenkarm 38 entgegen der Wirkung seiner Belastungsfeder verschwenkt und betätigt hiebei einen Ausschalter für den Kratzboden oder es läuft ein Ballen 34 auf die Klappe auf, wodurch der Ausschalter für den Kratzboden betätigt werden kann.

Besonders zweckmäßig ist es, die Fördereinrichtung als Kratzboden auszubilden. Durch das Eindringen der Zähne des Gurtes des Kratzbodens in den Strohballen wird eine sichere Mitnahme des Strohballens erreicht. Bevorzugt ist der Kratzboden in einem dem Ballendurchmesser entsprechenden Abstand über einer zur Schneideinrichtung führenden vorzugsweise horizontalen Auflageebene angeordnet und liegt mit seiner Unterseite an den Strohballen an. Dadurch ist der Kratzboden nur gering belastet.

Eine Anordnung der Strohballen in zwei übereinander angeordneten Ebenen und damit eine Platzeinsparung werden ermöglicht, wenn in Weiterbildung der Erfindung die Oberseite des kratzbodens zur Abstützung von Strohballen ausgebildet ist, wobei im Abstand von dem der Schneideinrichtung abliegenden Ende (Umlenkstelle) des Kratzbodens eine krumme Leitwand zur Überführung der Ballen auf die zur Schneideinrichtung führende Auflageebene vorgesehen ist.

Die erfindungsgemäße Einrichtung kann auch dazu verwendet werden, die erzeugten Schwelgase außerhalb des Schachtofens zu verwerten. Zu diesem Zweck kann ein Teil der Schwelgase über Perforationen im Boden des Schachtofens abgezogen und beispielsweise einem Gasmotor zur weiteren Verbrennung zugeführt werden.

Die Erfindung wird nachstehend anhand eines in der Zeichnung dargestellten Ausführungsbeispieles einer Anlage, mit der das erfindungsgemäße Verfahren ausgeübt werden kann, näher beschrieben. Es zeigt,

Figur 1 einen Vertikal (Längs-)schnitt durch eine erfindungsgemäße Anlage entlang der Linie B-B in

Figur 2 die einen Schnitt entlang der Linie A-A in Fig. 1 wiedergibt,

Figur 3 schematisch in einer Seitenansicht eine Schneideinrichtung für in Ballenform vorliegende lange Halme, insbes. Strohballen,

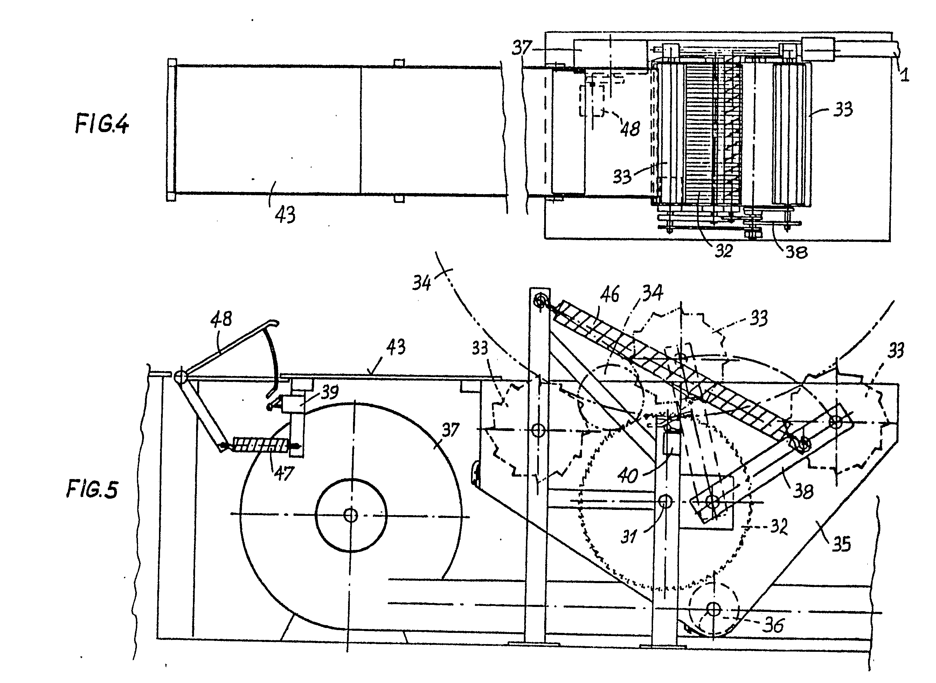

Figur 4 eine Draufsicht auf die in Fig. 3 dargestellte Schneideinrichtung, und

Figur 5 ein Detail aus Fig. 3, jedoch in demgegenüber modifizierter Ausführung.

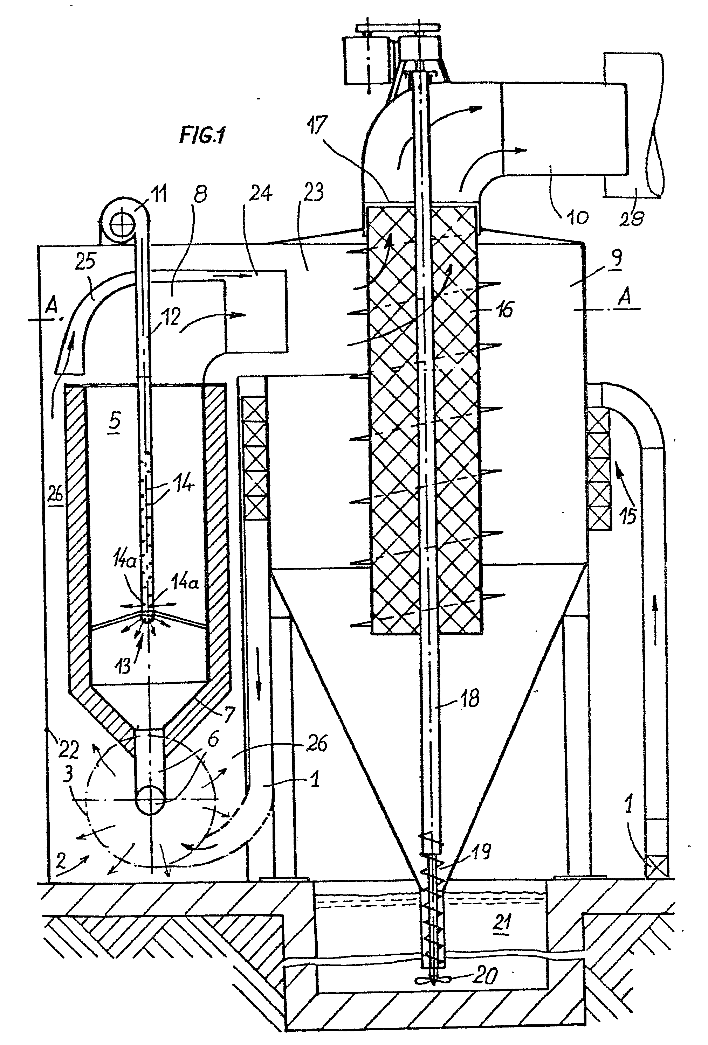

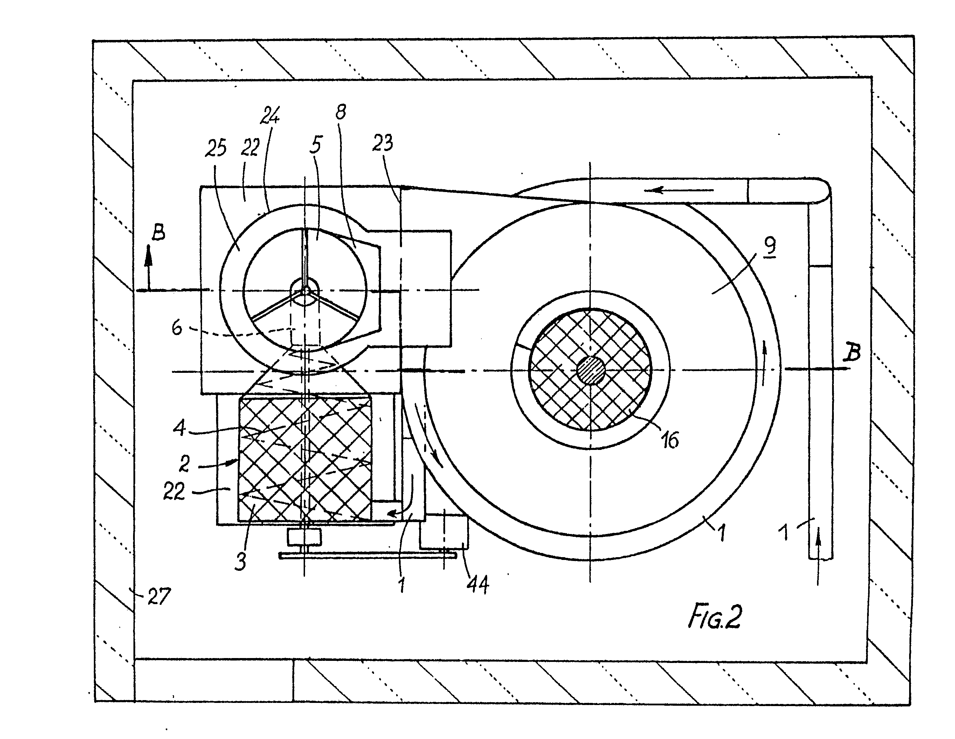

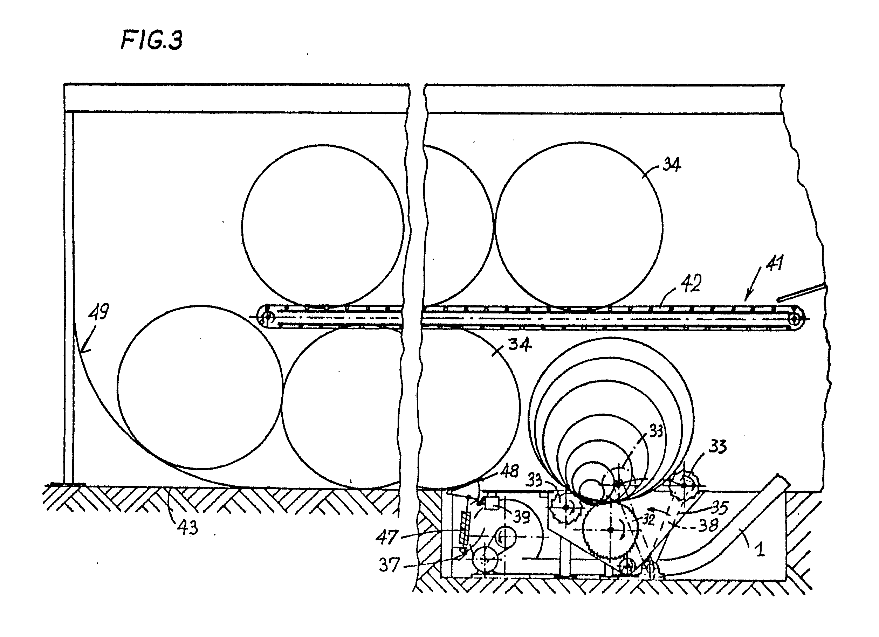

In der Zeichnung ist mit 1 ein Förderkanal für die Halmstücke bezeichnet. Dieser Förderkanal geht im dargestellten Ausführungsbeispiel von einer Schneideinrichtung (Fig. 3) aus und mündet in einen als Siebtrommel ausgebildeten Separator 2 (Fig. 1, 2). In diesem Separator 2 erfolgt die Trennung der Strohhalme von der Luft. Die Strohhalme sammeln sich im Inneren der Siebtrommel 3 und die Luft strömt durch die Siebtrommel 3 nach außen ab. In der Siebtrommel läuft eine Austragschnecke 4 um, die von einem Antriebsmotor 44 angetrieben wird. Die Austragschnecke 4 fördert die Halme in einen Zubringerkanal 6, der in einen Schachtofen 5 mündet. Der Zubringerkanal 6 ist hiebei so gestaltet, daß die Strohhalme in diesem Kanal verdichtet und nach Art eines Stoppels in den Schachtofen 5 gefördert werden. Der Zubringerkanal 6 mündet hiebei im Bereich des Bodens 7 in den Schachtofen 5, im dargestellten Ausführungsbeispiel vertikal. Es kann jedoch auch in Abänderung der dargestellten Ausführungsform eine Horizontale Einmündung vorgesehen sein. Oben ist der Schachtofen 5 von einer Abdeckhaube 8 abgeschlossen, die in einen Abscheider 9 mündet, in welchem die Abgase aus dem Schachtofen von mitgerissenen Feststoffen, insbesondere von Asche, befreit werden. An den Abscheider 9 ist eine Absaugleitung 10 angeschlossen. Der Abscheider 9 ist im dargestellten Ausführungsbeispiel als Zyklon ausgebildet. Die Luftversorgung des Schachtofens erfolgt durch eine an ein Frischluftgebläse 11 angeschlossene Lanze 12, die zentral im Schachtofen 5 angeordnet ist. Das dem Boden 7 des Schachtofens 5 näher gelegene Ende der Lanze 12 ist mit einem Düsenkopf 13 versehen. Die Düsen im Düsenkopf 13 sind zur Längsachse der Lanze 12 unter von 90° verschiedenen Winkeln geneigt. Damit kann ähnlich wie aus einer Brause über den Ofenquerschnitt auf die Schachtfüllung Frischluft aufgeblasen werden. Das Brennstoffbett schwelt, wobei die Schwelzone ungefähr bis zur Einmündung des Zubringerkanales 6 in den Boden 7 des Schachtofens 5 reicht. Anschließend an den Düsenkopf 13 ist der Mantel der Lanze 12 mit Öffnungen 14 versehen, durch welche ebenfalls Luft in den Schachtofen in dem nicht mit Halmen gefüllten Teil eingebracht wird. Die dem Düsenkopf benachbarten Öffnungen 14a sind darauf mit dem Winkel zur Längsachse des Schachtofens 5 angebracht, sodaß dort eine gute Verwirbelung auftritt und die Feststoffe, die aus dem Brennstoffbett gegebenenfalls mitgerissen werden, gegen die Schachtofenwand geschleudert werden und von dort zumindest zum Teil wieder in das Brennstoffbett zurückfallen.

Der Förderkanal 1 für die Halme umschließt den Mantel des Zyklons durch die Ascheabscheidung nach Art einer Rohrschlange 15. Im stationären Betrieb wird daher aus dem Ascheabscheider 9 Wärme an die Rohrschlange 15 und damit auch an die in die Rohrschlange 15 strömende Luft und die von der Luft mitgeführten Halme übertragen. Solcherart kann eine Trocknung der Halme und eine Vorwärmung der Halme erreicht werden. Im Aschenabscheidezyklon 9 läuft eine Siebtrommel 16 um, deren Achse mit der Achse des Ascheabscheidezyklons 9 zusammenfällt. Die obere Stirnfläche 17 der Siebtrommel 16 ist in der Absaugleitung 10 für die gereinigten Heißgase angeordnet. Die Siebtrommel 16 ist von einer Schnecke umgeben, welche die sich ansetzende Asche nach unten in den kanalförmigen Teil des Aschenabscheiders 9 transportiert. Mit der Welle 18 der Siebtrommel 16 ist eine Austragschnecke 19 für die Asche gekuppelt. Die Welle der Siebtrommel 16 ist hiebei bodenseitig aus dem Aschenabscheidezyklon 9 herausgeführt und am freien Ende mit einem Rührer 20 versehen, der in ein Wasserbassin 21 ragt. Sobald das Wasser im Bassin 21 einen ausreichenden Sättigungsgrad mit Asche erreicht hat, wird das Bassin in ein Güllefaß entleert und die Flüssigkeit kann dann als Düngemittel auf Äcker versprüht werden. Zur Aufnahme des Schachtofens 5 des ihm vorgeschalteten Separators 2 und der Abdeckhaube 8 ist ein gemeinsames Gehäuse 22 vorgesehen. Dieses Gehäuse weist im Bereich der Abdeckhaube 8 eine in den Aschenabscheider 9 mündende Öffnung 23 auf. Dadurch ist es möglich, daß die Wärme, insbesondere aber die Transportluft der Halme, die im Separator 2 abgeschieden wird, nach Erwärmung im Innenraum des Gehäuses 22 über den Ascheseparator 9 und der Absaugleitung 10 gemeinsam mit den Heißgasen aus dem Schachtofen 5 einer Verwertung zugeführt wird. Um die Wärme, die durch die Verbrennung im Schachtofen entsteht, besonders gut auszunutzen, ist die Abdeckhaube 8 des Schachtofens 5 unter Belassung eines Spaltes 25 von einer Außenhaube 24 umschlossen, die mit dem Innenraum 26 des Gehäuses 22 längs eines senkrecht zur Längsachse des Schachtofens 5 verlaufenden Spaltes und mit dem Innenraum des Aschenabscheiders 9 in Verbindung steht. Wie aus Fig. 2 ersichtlich ist, ist der Schachtofen 5, der ihm vorgeschaltete Separator 2, die Abdeckhaube 8 des Schachtofens 5 sowie der Aschenabscheider 9 mit der Absaugleitung 10 für die Heißgase von einem Bauwerk 27 umschlossen. Dieses Bauwerk ist in Fig. 1 aus Gründen der Deutlichkeit nicht eingetragen. Lediglich die Abfuhrleitung 28 für die Heißgase, die in das Bauwerk 27 frei einmündet, ist in Fig. 1 schematisch angedeutet. Die Abfuhrleitung 28 mündet hiebei im wesentlichen koaxial zur Absaugleitung 10 ein und der Querschnitt der Abfuhrleitung 28 am offenen Ende ist größer als der Querschnitt der Absaugleitung 10 für die vom Aschenabscheider 9 kommenden Heißgase. Dadurch ist es möglich, daß die Leitung 28 sowohl die Heißgase aus der Absaugleitung 10 als auch die Heißluft, die innerhalb des Gebäudes 27 vorhanden ist, absaugt und der weiteren Verwertung insbesondere zum Trocknen von Körnerfrüchten, z. B. Mais, zuführt.

Aus Fig. 3 ist ein Ausführungsbeispiel einer Schneideinrichtung für Stroh dargestellt. Diese Schneideinrichtung besitzt eine Welle 31, auf die in einem der vorgegebenen Länge der Halme entsprechenden Abstand Kreismesser 32 bzw. Kreissägeblätter angeordnet sind. Die Halme werden zu Strohballen 34 gepreßt und in gepreßtem Zustand auf die Messerwelle 31 aufgelegt und ruhen in der Schneideinrichtung auf Stützwalzen 33, deren Achsen parallel zur Messerwelle 31 verlaufen. Unter der Messerwelle 31 ist ein Sammelbehälter 35 für die geschnittenen Halme angeordnet. Im Bereich des Bodens des Sammelbehälters 35 befindet sich ein Querförderer 36, der etwa als Schnecke ausgebildet sein kann und der dazu dient, die geschnittenen Halme in den Förderkanal 1 zu fördern, der an ein Luftgebläse 37 angeschlossen ist. Das Aus- und Einschalten der Fördereinrichtung 41 für die Ballen 34 kann automatisiert werden. Eine Möglichkeit sieht hiebei vor, daß eine der Stützwalzen 33 auf einem Schwenkarm 38 gelagert ist, der unter dem Einfluß einer Feder 46 steht, die bestrebt ist, die Stützwalze 33 in Anlage am Ballen zu halten. Wird daher der Ballen im Zuge des Zerschneidens kleiner, so folgt die Stützwalze und damit auch der Schwenkarm 38 der Verkleinerung des Ballendurchmessers, wie dies aus den Fig. 3 und 5 in strichpunktierten Linien angedeutet ist. Diese Bewegung kann nun zum Einschalten der Fördereinrichtung 41 verwendet werden. Zu diesem Zweck ist im Schwenkbereich des Schwenkarmes 38 ein Einschalter 40 für die Fordereinrichtung 41 der Ballen 34 angeordnet. In der Darstellung gemäß Fig. 5 ist in einem strichpunktierten Linienzug die Lage des Schwenkarmes 38 gezeigt, die er einnimmt, wenn der Einschalter 40 betätigt wird. Wird die Fördereinrichtung 41 eingeschaltet, so wird ein weiterer Ballen 34 auf die Kreismesser 32 aufgelegt, wobei die Stützwalze 33 entgegen der Wirkung ihrer Belastungsfeder 46 verschwenkt wird. Diese Verschwenkung kann nun zur Betätigung eines Auschalters für die Fördereinrichtung 41 verwendet werden. Das Ausschalten der Fördereinrichtung 41 kann jedoch auch durch eine Klappe 48 bewirkt werden, die unter dem Einfluß einer Feder 47 steht und über die Auflageebene 43 der Ballen 34 aufragt, sodaß jeder Ballen im Zuge seiner Bewegung zur Schneideinrichtung über die Klappe wandert und dabei den Ausschalter 39 betätigt. Der Kratzboden 42 ist in einem dem Ballendurchmesser entsprechenden Abstand über einer zur Scheideinrichtung führenden horizontalen Auflagenebene 43 angeordnet und liegt mit seiner Unterseite an den Strohballen 34 an. An der Oberseite des Kratzbodens 42 liegen ebenfalls Strohballen 34, sodaß die Strohballen in zwei Etagen übereinander angeordnet sind, wodurch eine Platzersparnis gegenüber einer einetagigen Anordnung erzielt wird. Um die Ballen 34 von der oberen Etage in die untere Etage zu bringen, ist im Abstand von dem der Schneideinrichtung abliegenden Ende des Kratzbodens 42 eine krumme Leitwand 49 angeordnet, längs der die Ballen 34 in die zur Schneideinrichtung führende Auflageebene 43 transportiert werden.

In einer in der Zeichnung nicht dargestellten Ausführungsform der Erfindung kann der Boden 7 des Schachtofens 5 mit Perforationen zum Abzug eines Teiles der Schwelgase versehen sein. Diese Schwelgase können dann außerhalb des Schachtofens 5 einer Verbrennung etwa in einem Gasmotor zugeführt werden.

Die Lanze 12 kann auch in nicht dargestellter Weise um ihre Längsachse im Schachtofen 5 drehbar angeordnet und insbesondere zwischen dem Düsenkopf 13 und den diesen benachbarten Öffnungen 14a mit einem Haltestern od. dgl. versehen sein. Dieser Haltestern kann am Ende der Sternarme mit Kratzern versehen sein, die an die Schachtwand heranreichen. Durch diese Anordnung wird sichergestellt, daß sich in dem besonders gefährdeten Bereich der durch die Öffnungen 14a austretenden horizontalen Luftströme, welche Feststoffe an die Schachtwand schleudern, diese Festoffe dort nicht festpacken können, sondern laufend durch die Kratzer abgeschabt werden.

**Ansprüche**

1. Verfahren zum Verbrennen von Halmen, insbes. von Stroh, wobei die Halme in Stücke geschnitten und in einem Luftstrom zur Feuerung gefördert und einem Schwelvorgang unterworfen werden, worauf den Schwelgasen Frischluft zugeführt und die Schwelgase sowie die schwelenden Halmstücke verbrannt werden, wonach die Abgase einer weiteren Verwendung zugeführt werden, dadurch gekennzeichnet, daß

i) vor Erreichen der Feuerung die Luft abgesondert und die Halmstücke komprimiert und als komprimierter Stoppel der Feuerung zugeführt werden,

ii) die im Bereich der freien Oberfläche der komprimierten schwelenden Halmstücke befindlichen Halme verbrannt werden, und

iii) aus den Abgasen der Verbrennung etwaige mitgerissene Asche entfernt wird und die so gereinigten Gase weiterverwendet werden.

2. Verfahren nach Anspruch 1, dadurch gekenzeichnet, daß die Asche in Wasser eingebracht wird.

3. Anlage zur Ausübung des Verfahrens nach Anspruch 1 oder 2, dadurch gekennzeichnet, daß zur Führung des Luftstromes und der in diesem befindlichen Halmstücke ein Förderkanal (1) vorgesehen ist, der in einen, z. B. als Siebtrommel (3) ausgebildeten Separator (2) mündet, der mit einer Austragvorrichtung, z. B. einer Austragschnecke (4), versehen ist, die in einen Schachtofen (5) über einen Zubringerkanal (6) die Halme im verdichteten Zustand fördert, der in den Schachtofen (5) im Bereich von dessen Boden (7) mündet, wobei eine Vorrichtung zur Zufuhr von Frischluft zu den Schwelgasen vorgesehen ist, und daß der Schachtofen (5) von einer Abdeckhaube (8) abgedeckt ist, die in einen Abscheider (9), insbes. Zyklon, für mit den Abgasen aus dem Schachtofen (5) mitgerissene Asche u. dgl. Feststoffe mündet, wobei an den Abscheider (9) eine Absaugleitung (10) für die gereinigten Heißgase angeschlossen ist.

4. Anlage nach Anspruch 3, dadurch gekennzeichnet, daß die Vorrichtung zur Zufuhr von Frischluft zu den Schwelgasen eine in dem Schachtofen (5) zentral angeordnete, an ein Frischluftgebläse angeschlossene Lanze (12) aufweist, deren dem Boden (7) des Schachtofens (5) zugeordnetes Ende mit einem Düsenkopf (13) versehen ist, dessen Düsen zur Längsachse der Lanze (12) unter von 90° verschiedenen Winkeln geneigt sind und daß anschließend an den Düsenkopf (13) der Mantel der Lanze (12) mit Öffnungen (14) versehen ist, wobei die dem Düsenkopf benachbarten Öffnungen (14a) unter rechtem Winkel zur Längsachse der Lanze (12) angeordnet sind.

5. Anlage nach Anspruch 3 oder 4, dadurch gekennzeichnet, daß der Förderkanal (1) für die Halme, den Mantel des Ascheabscheiders (9) nach Art einer Rohrschlange (15) umschließt.

6. Anlage nach einem der Ansprüche 3 bis 5, dadurch gekennzeichnet, daß in dem Ascheabscheidezyklon (9) eine umlaufende Siebtrommel (16) angeordnet ist, deren Achse sich in Richtung der Längsachse des Zyklons erstreckt und deren eine Stirnfläche (17) in der Absaugleitung (10) für die gereinigten Heißgase angeordnet ist.

7. Anlage nach Anspruch 6, dadurch gekennzeichnet, daß mit der Welle (18) der Siebtrommel (16) eine Austragschnecke (19) für die Asche gekuppelt ist, wobei gegebenenfalls die Welle (18) der Siebtrommel (16) bodenseitig aus dem Ascheabscheidezyklon (9) herausgeführt und am freien Ende mit einem Rührer (20) versehen ist, der in ein Wasserbassin (21) ragt.

8. Anlage nach einem der Ansprüche 3 bis 7, dadurch gekennzeichnet, daß der Schachtofen (5), der ihm vorgeschaltete Separator (2) und die Abdeckhaube (8) des Schachtofens (5) in einem gemeinsamen Gehäuse (22) angeordnet sind, das gegebenenfalls im Bereich der Abdeckhaube (8) eine in den Aschenabscheider (9) mündende Öffnung (23) aufweist, wobei die Abdeckhaube (8) unter Belassung eines Spaltes (25) von einer Außenhaube (24) umschlossen ist, die mit dem Innenraum (26) des Gehäuses (22), insbes. längs eines senkrecht zur Längsachse des Schachtofens (5) verlaufenden Spaltes und mit dem Innenraum des Aschenabscheiders (9) in Verbindung steht.

9. Anlage nach einem der Ansprüche 3 bis 8, dadurch gekennzeichnet, daß der Schachtofen (5), der ihm vorgeschaltete Separator (2), die Abdeckhaube (8) des Schachtofens (5) sowie der Aschenabscheider (9) mit der Absaugleitung (10) für die Heißgase von einem Bauwerk (27) umschlossen sind, in welches eine Abfuhrleitung (28) für Heißgase frei und im wesentlichen koaxial zur Absaugleitung (10), die an den Ascheabscheider (9) angeschlossen ist, mündet, wobei der Querschnitt der Abführleitung (28) am offenen Ende bevorzugt größer als der Querschnitt der Absaugleitung (10) für die Heißgase ist.

10. Einrichtung zum Schneiden von Halmen, insbes. Stroh auf vorgegebene Längen für eine Anlage nach einem der Ansprüche 3 bis 9, dadurch gekennzeichnet, daß in einem der vorgegebenen Länge der Halme entsprechenden Abstand auf einer Welle (31) Kreismesser (32) bzw. Kreissägeblätter angeordnet sind, wobei die Halme in zu zylindrischen Ballen (34) gepreßtem Zustand auf die Messerwelle (31) aufgelegt werden und auf Stützwalzen (33), deren Achsen parallel zur Messerwelle (31) angeordnet sind, ruhen.

11. Einrichtung nach Anspruch 10, dadurch gekennzeichnet, daß unter der Messerwelle (31) ein Sammelbehälter (35) für die geschnittenen Halme angeordnet ist, wobei im Bereich des Bodens des Sammelbehälters (35) ein Querförderer (36), insbes. eine Schnecke, angeordnet ist, welche die Halme in der zum Schachtofen (5) bzw. dem diesen vorgeschalteten Separator (2) führenden Förderkanal (1) fördert, der gegebenenfalls an ein Luftgebläse (37) angeschlossen ist.

12. Einrichtung nach Anspruch 10 oder 11, dadurch gekennzeichnet, daß eine der Stützwalzen (33) auf einem Schwenkarm (38) gelagert ist, der unter dem Einfluß einer Feder (46) steht, die bestrebt ist, die Stützwalze (33) anliegend an dem auf den Kreismessern (32) liegenden Ballen (34) zu halten, wobei im Schwenkbereich des Schwenkarmes (38) ein Einschalter (40) für den Kratzboden (42) angeordnet ist und ein Ausschalter (39) für den Kratzboden (42) entweder ebenfalls im Schwenkbereich des Schwenkarmes (38) oder im Schwenkbereich einer aus der Auflageebene (43) der Ballen (34) aufragenden, durch eine Feder (47) belasteten Klappe (48) liegt.

13. Einrichtung nach Anspruch 12, dadurch gekennzeichnet, daß die Fördereinrichtung (41) als Kratzboden (42) ausgebildet ist.

14. Einrichtung nach Anspruch 13, dadurch gekennzeichnet, daß der Kratzboden (42) in einem dem Ballendurchmesser entsprechenden Abstand über einer zur Schneideinrichtung führenden, vorzugsweise horizontalen Auflageebene (43) angeordnet ist und mit seiner Unterseite an den Strohballen (34) anliegt.

15. Einrichtung nach Anspruch 14, dadurch gekennzeichnet, daß die Oberseite des Kratzbodens (42) zur Abstützung vom Strohballen (34) ausgebildet ist, wobei im Abstand von dem der Schneideinrichtung abliegenden Ende (Umlenkstelle) des Kratzbodens (42) eine krumme Leitwand (49) zur Überführung der Ballen (34) auf die zur Schneideinrichtung führende Auflageebene (43) vorgesehen ist.

16. Anlage nach einem der Ansprüche 3 bis 9, dadurch gekennzeichnet, daß Schwelgase, bevorzugt durch im Boden (7) des Schachtofens (5) angeordnete Perforationen abziehbar und außerhalb des Schachtofens (5) einer Verbrennung, z. B. in einem Gasmotor zuführbar sind.

17. Anlage nach einem der Ansprüche 4 bis 9, dadurch gekennzeichnet, daß die Lanze (12) um ihre Längsachse drehbar im Schachtofen (5) angeordnet ist, wobei insbes. zwischen dem Düsenkopf (13) und dem diesen benachbarten Öffnungen (14) ein Haltestern od. dgl. dür die Lanze (12) angeordnet ist, der an den Enden der Sternarme mit Kratzern versehen ist, die an die Schachtwand heranreichen.

## Claims

1. A process of burning stalks, particularly of straw, in which the stalks are cut into pieces and are conveyed to the furnace in an air stream and are devolatilized, whereafter fresh air is supplied to the overhead gases produced by the devolatilization, the overhead gases and the stalk pieces being devolatilized are burnt, and the exhaust gases are subsequently put to a further use, characterized in that

i) before the furnace is reached the air is separated and the stalk pieces are compacted and are supplied to the furnace as a compacted plug ;

ii) the stalks which are disposed adjacent to the free surface of the compressed stalk pieces which are being devolatilized are burnt ; and

iii) any entrained ashes are removed from the exhaust gases of the furnace and the thus purified gases are put to further use.

2. A process according to claim 1, characterized in that the ashes are introduced into water.

3. A plant for carrying out the process according to claim 1 or 2, characterized in that a conveying passage (1) is provided for conducting the air stream and the stalk pieces contained therein and opens into a separator (2), which consists, e. g., of a sieve drum (3) and is provided with a discharge device, e. g., a discharge screw (4), which conveys the stalks in a compacted state through a feed passage (6) into a shaft furnace (5), in which the feed passage opens adjacent to the bottom of the shaft furnace, a device for supplying fresh air to the overhead gases is provided, the shaft furnace (5) is covered by a covering hood (8), which opens into a separator (9), particularly a cyclone, for ashes and the like solids entrained by the exhaust gases from the shaft furnace (5), and a duct (10) for sucking off the purified hot gases is connected to the separator (9).

4. A plant according to claim 3, characterized in that the device for supplying fresh air to the overhead gases comprises a lance (12), which is centrally disposed in the shaft furnace (5) and is connected to a fresh air blower and at that end which is associated with the bottom (7) of the shaft furnace (5) is provided with a nozzle head (13), the nozzles of which are inclined at an angle differing from 90° from the longitudinal axis of the lance (12), the shell of the lance (12) is provided next to the nozzle head (13) with openings (14), and those openings (14a) which are next to the nozzle head extend at right angles to the longitudinal axis of the lance (12).

5. A plant according to claim 3 or 4, characterized in that the passage (1) for conveying the stalks surrounds the shell of the ash separator (9) like a pipe coil (15).

6. A plant according to any of claims 3 to 5, characterized in that the ash-separating cyclone (9) contains a revolving sieve drum (16), the axis of which extends in the direction of the longitudinal axis of the cyclone and one end face (17) of which is disposed in the duct (10) for sucking off the purified hot gases.

7. A plant according to claim 6, characterized in that the shaft (18) of the sieve drum (16) is coupled to a screw (19) for discharging the ashes and, if desired, the shaft (18) of the sieve drum (16) extends out of the ash-separating cyclone (9) at its bottom and is provided at its free end with a stirrer (20), which protrudes into a water basin (21).

8. A plant according to any of claims 3 to 7, characterized in that the shaft furnace (5), the separator (2) preceding the shaft furnace, the covering hood (8) of the shaft furnace (5) are arranged in a common housing (22), which has, if desired, adjacent to the covering hood (8) an opening (23) leading into the ash separator (9), the covering hood (8) is enclosed by and defines a clearance (25) with an outer hood (24), which communicates with the interior (26) of the housing (22) particularly along a gap, which extends at right angles to the longitudinal axis of the shaft furnace (5), and the outer hood also communicates with the interior of the ash separator (9).

9. A plant according to any of claims 3 to 8, characterized in that the shaft furnace (5), the separator (2) preceding the shaft furnace, the covering hood (8) of the shaft furnace (5) and the ash separator (9) with the duct (10) for sucking off the hot gases are enclosed by a building (27), into which a duct (28) for discharging hot gases opens freely and substantially coaxially to the sucking-off duct (10) which is connected to the ash separator (9), and the cross-section of the discharge duct (28) at its open end is preferably larger than the cross-section of the duct (10) for sucking off the hot gases.

10. Apparatus for cutting stalks, particularly straw, to predetermined lengths, for a plant according to any of claims 3 to 9, characterized in that circular knives (32) or circular sawblades are mounted on a shaft (31) with a spacing which corresponds to the predetermined length of the stalks, and the stalks which have been compacted to form cylindrical bales (34) are placed on the cutter shaft (31) and rest on backing rollers (33) having axes which are parallel to the cutter shaft (31).

11. Apparatus according to claim 10, characterized in that a bin (35) for collecting the cut stalks is provided under the cutter shaft (31), a transverse conveyor (36), particularly a screw, is provided adjacent to the bottom of the collecting bin (35) and conveys the stalks into the conveying duct (1) leading to the shaft furnace (5) or to the separator (2) preceding the shaft furnace, and the conveying duct (1) is connected to an air blower (37), if desired.

12. Apparatus according to claim 10 or 11, characterized in that one of the backing rollers (33) is mounted on a pivoted arm, which is biased by a spring (46), which tends to hold the backing roller (33) in engagement with the bale (34) lying on the circular cutters (32), a make switch (40) for the scraping bottom (42) is disposed in the range of pivotal movement of the pivoted arm (38), a break switch (39) for the scraping bottom (42) is disposed also in the range of pivotal movement of the pivoted arm (38) or in the range of pivotal movement of a hinged plate, which protrudes upwardly from the plane (43) on which the bales (34) are supported, and said hinged plate is biased by a spring (47).

13. Apparatus according to claim 12, characterized in that the conveyor (41) consists of a scraping bottom (42).

14. Apparatus according to claim 13, characterized in that the scraping bottom (42) is disposed over a preferably horizontal supporting plane (43), which leads to the cutting device, the distance of the scraping bottom above said supporting plane corresponds to the bale diameter, and the underside of the scraping bottom engages the straw bales (34).

15. Apparatus according to claim 14, characterized in that the upper surface of the scraping bottom (42) is designed to support straw bales (34), and a curved guiding wall (49) for transferring the bales (34) to the supporting plane (43) leading to the cutting device is provided and spaced from that end (reversing portion) of the scraping bottom (42) which is remote from the cutting device.

16. A plant according to any of claims 3 to 9, characterized in that overhead gases are adapted to escape, preferably through perforations in the bottom (7) of the shaft furnace (5), and are adapted to be supplied to a combustion process outside the shaft furnace (5), e. g., in a gas motor.

17. Apparatus according to any of claims 4 to 9, characterized in that the lance (12) is mounted in the shaft furnace (5) so as to be rotatable about the longitudinal axis of the lance, a spider or the like for retaining the lance (12) is provided particularly between the nozzle head (13) and openings (14) adjacent to said nozzle head, and said spider or the like is provided at the ends of the spider arms with scrapers, which extend as far as to the shaft wall.

## Revendications

1. Procédé pour la combustion de tiges d'herbe, surtout de paille, les tiges d'herbe étant coupées en morceaux et transportées vers la combustion dans un courant d'air et étant soumises à un procédé de combustion incomplète, de l'air frais étant ensuite fait couler aux gaz dégagés de la combustion incomplète et ces gaz de combustion incomplète, de même que les tiges d'herbe qui couvent étant alors brûlés, les gaz d'échappement étant ensuite transportés pour une utilisation ultérieure. Les caractéristiques de ce procédé sont que

i) l'air est séparé et que les morceaux de tiges sont comprimés avant l'atteinte de la combustion et qu'ils sont donc amenés sous forme de chaumes comprimées à la combustion,

ii) les tiges d'herbe se trouvant dans la zone de la surface libre des morceaux de tiges comprimés, étant en état de combustion incomplète, sont brûlées et que

iii) des cendres éventuellement entraînées sont éliminées des gaz d'échappement de la combustion et que les gaz ainsi purifiés sont utilisés ultérieurement.

2. Procédé selon la revendication 1 avec caractéristique que les cendres sont mises dans l'eau.

3. Installation pour l'exécution du procédé selon la revendication 1 ou 2 avec caractéristique qu'un canal transporteur (1) est prévu pour le transport du courant d'air et des morceaux de tiges d'herbe s'y trouvant, qui débouche dans un séparateur (2), formé p. ex. en tambour cribleur (3), muni d'un dispositif d'évacuation p. ex. une hélice d'évacuation (4), qui transporte les tiges d'herbe en état comprimé dans un four à cuve (5) par un canal d'amenée (6), qui débouche dans le four à cuve (5) dans la zone du fond de celui-ci (7) ; un dispositif pour l'apport d'air frais vers les gaz de combustion incomplète est alors prévu et le four à cuve (5) est couvert d'un capot de couverture (8) qui débouche dans un séparateur (9), surtout cyclone, pour les cendres, entraînées avec les gaz d'échappement du four à cuve (5), de même qu'avec d'autres matières solides, un tuyau d'aspiration (10) pour les gaz chauds purifiés étant alors raccordé au séparateur (9).

4. Installation selon la revendication 3 avec caractéristique que le dispositif pour l'apport d'air frais aux gaz de combustion incomplète présente une lance (12) étant située au centre du four à cuve (5) et étant raccordée à une soufflante d'air frais dont l'extrémité tournée vers le font (7) du four à cuve (5) est munie d'une tête gicleuse (13) dont les gicleurs sont inclinés à des angles différents de 90° vers l'axe longitudinal de la lance (12) et que le manteau de la lance (12), suivant la tête gicleuse (13) est muni d'ouvertures (14), les ouvertures contigues à la tête gicleuse (14a) étant alors disposées en angle droit à l'axe longitudinal de la lance (12).

5. Installation selon la revendication 3 ou 4 avec caractéristique que le canal de transport (1) pour les tiges d'herbe entoure le manteau du séparateur de cendres (9) sous forme d'un serpentin de tuyau (15).

6. Installation selon l'une des revendications 3 à 5 avec caractéristique qu'un tambour cribleur tournant (16) est disposé dans le cyclone-séparateur de cendres (9), dont l'axe s'avance en direction de l'axe longitudinal du cyclone et dont l'un des fronts (17) est disposé dans la conduite d'évacuation pour les gaz chauds nettoyés.

7. Installation selon la revendication 6 avec caractéristique que l'arbre (18) du tambour cribleur (16) est combiné avec une hélice d'évacuation (19) pour les cendres, l'arbre (18) du tambour cribleur (19) étant, le cas échéant, fait sortir du côté du fond de cyclone-séparateur de cendres (9), et muni à l'extrémité libre d'un agitateur (20) qui avance dans un bassin d'eau (21).

8. Installation selon l'une des revendications 3 à 7 avec caractéristique que le four à cuve (5), le séparateur étant placé en amont de celui-ci (2) et le capot de couverture (8) du four à cuve (5) sont disposés dans un boîtier commun (22) qui, le cas échéant, présente une ouverture (23) dans la zone du capot de couverture (8), cette ouverture débouchant dans le séparateur de cendres (9), le capot de couverture (8) étant alors entouré, en laissant une fente (25), d'un capot extérieur, étant en jonction avec l'intérieur (26) du boîtier (22), surtout le long d'une fente allant verticalement à l'axe longitudinal du four à cuve (5), et avec l'intérieur du séparateur de cendres (9).

9. Installation selon l'une des revendications 3 à 8 avec caractéristique que le four à cuve (5), le séparateur (2), placé en amont de celui-ci, le capot de couverture (8) du four à cuve (5), de même que le séparateur de cendres (9) avec le dispositif d'aspiration (10) pour les gaz chauds sont entourés d'un bâtiment (27) dans lequel débouche librement et dans l'essentiel coaxialement à la conduite d'aspiration (10) une conduite d'évacuation pour gaz chauds (28), raccordée au séparateur de cendres (9), la section transversale de la conduite d'évacuation (28) étant à l'extrémité ouverte de préférence plus grande que la section transversale de la conduite d'aspiration (10) pour gaz chauds.

10. Dispositif pour la coupe des tiges d'herbe, surtout de paille, à des longueurs déterminées pour une installation selon l'une des revendications 3 à 9 avec caractéristique que des couteaux circulaires (32), resp. lames de scie circulaire sont disposés à une distance correspondant à la longueur donnée des tiges d'herbe, les tiges étant alors posées en état comprimé en balles cylindriques (34) sur l'arbre porte-lames (31) et reposent sur des cylindres d'appui (33), dont les axes sont disposés parallèlement à l'arbre porte-lames (31).

11. Installation selon la revendication 10 avec caractéristique qu'un récipient collecteur (35) pour les tiges coupées est disposé sous l'arbre porte-lames (31), une bande transversale (36), surtout une hélice étant alors disposée dans le domaine du fond du récipient collecteur (35) ; cette hélice transporte les tiges vers le canal transporteur (1), conduisant vers le four à cuve (5), resp. le séparateur (2), placé en amont, le canal étant, le cas échéant, raccordé à une soufflante d'air (37).

12. Installation selon la revendication 10 ou 11 avec caractéristique qu'un des cylindres d'appui (33) est logé sur un bras pivotant (38), qui se trouve sous l'influence d'un ressort (46), s'efforçant de maintenir le cylindre d'appui (33) en position collée avec la balle (34), se trouvant sur les couteaux circulaires (32) ; dans le domaine pivotant du bras pivotant (38) un commutateur-conjoncteur (40) est disposé pour le fond à raclettes (42) et un commutateur-disjoncteur (39) est disposé pour le fond à raclettes (42), soit aussi dans le domaine pivotant du bras pivotant (38), soit dans le domaine d'une trappe (48) chargée d'un ressort (47), surgissant du plan d'appui (43) des balles (34).

13. Installation selon la revendication 12 avec caractéristique que le dispositif de transport (41) est formé en fond à raclettes (42).

14. Installation selon la revendication 13 avec caractéristique que le fond à raclettes (42) est disposé à une distance correspondant au diamètre des balles au dessus d'un plan de support (43), de préférence horizontal, conduisant au dispositif de coupe et que le fond colle avec son côté de dessous à la balle de paille (34).

15. Installation selon la revendication 14 avec caractéristique que le côté dessus du fond à raclettes (42) est formé comme support pour les balles de paille (34), une paroi de guidage courbée étant alors prévue à distance de l'extrémité du fond à raclettes (42) qui est décollée du dispositif de coupe (endroit de changement de direction), pour le guidage des balles (34) sur le plan de support (43) conduisant vers le dispositif de coupe.

16. Installation selon l'une des revendications 3 à 9 avec caractéristique que des gaz de combustion incomplète peuvent être évacués de préférence par des perforations dans le fond (7) du four à cuve (5) et peuvent être amenés à l'extérieur du four à cuve (5) à une combustion p. ex. dans un moteur à gaz.

17. Installation selon l'une des revendications 4 à 9 avec caractéristique que la lance (12) est disposée dans le four à cuve (5) de forme rotative autour de son axe longitudinal, une étoile d'arrêt ou similaire étant alors disposée pour la lance (12), surtout entre la tête gicleuse (13) et les ouvertures (14) contiguës à celle-ci. Cette étoile est munie aux extrémités des bras d'étoiles des grattoirs qui touchent la paroi de la cuve.

FIG.1

*Fig.2*

0 022 132

FIG.3

FIG.4

FIG.5

0 022 132